# EUROPÄISCHE PATENTANMELDUNG

(11) **EP 3 178 320 A1**
(43) Veröffentlichungstag der Anmeldung: **14.06.2017**
(21) Anmeldenummer: 15199491.0
(22) Anmeldetag: 11.12.2015
(51) Int. Cl.: A01N 25/22, A01N 43/653, A01N 25/02

(54) **FLÜSSIGE FUNGIZID-HALTIGE FORMULIERUNGEN**

(71) Anmelder: Bayer CropScience AG, 40789 Monheim am Rhein (DE)
(72) Erfinder: Die Erfindernennung liegt noch nicht vor
(74) Vertreter: BIP Patents

(57) **Zusammenfassung**

Die Erfindung betrifft stabilisierte flüssige Fungizid-haltige Formulierungen auf Basis von Fettsäureamiden als Lösungsmittel, ein Verfahren zu deren Herstellung, ein Verfahren zur zum Bekämpfung phytopathogener Pilze im Pflanzenschutz, sowie deren Verwendung als Pflanzenschutzmittel.

## Beschreibung

Die Erfindung betrifft stabilisierte flüssige Fungizid-haltige Formulierungen auf Basis von Fettsäureamiden als Lösungsmittel, ein Verfahren zu deren Herstellung, ein Verfahren zur zum Bekämpfung phytopathogener Pilze im Pflanzenschutz, sowie deren Verwendung als Pflanzenschutzmittel.

Es ist bereits bekannt, dass Prothioconazol in üblichen Formulierungen zur Bekämpfung von Pilzen verwendet werden kann (WO-A 96/16 048). Bei diesem Wirkstoff handelt es sich um das 2-[2-(1-Chlorcyclopropyl)-3-(2-chlor-phenyl)-2-hydroxy-propyl]-2,4-dihydro-3H-1,2,4-triazol-3-thion.Prothioconazole-haltige Formulierungen sind flüssige Formulierungen und werden beispielsweise als Emulsionskonzentrate auf dem Markt angeboten.

Es ist bekannt, dass sich der Wirkstoff Prothioconazole unter bestimmten Bedingungen zu der Verbindung 2-(1-Chlorocyclopropyl)-1-(2-chlorophenyl)-3-(1H-1,2,4-triazol-1-yl)propan-2-ol abbauen kann (PSM-Zulassungsbereicht, Tilmor, 2010.08.30, Lfd. Nr. 21, Bundesamt für Verbraucherschutz und Lebensmittelsicherheit).

Daher können Prothioconazol-haltige Formulierungen bereits bei der Herstellung eine gewisse Menge an 2-(1-Chlorocyclopropyl)-1-(2-chlorophenyl)-3-(1H-1,2,4-triazol-1-yl)propan-2-ol enthalten. Bei der Lagerung unter drastischen Bedingungen, wie erhöhte Temperaturen, Licht-Einstrahlung sowie Sauerstoffkontakt, kann ebenfalls ein Abbau von Prothioconazole zu 2-(1-Chlorocyclopropyl)-1-(2-chlorophenyl)-3-(1H-1,2,4-triazol-1-yl)propan-2-ol stattfinden, wodurch sich der Anteil an Wirkstoff in den Formulierungen entsprechend verringert. Da es sich bei der Verbindung 2-(1-Chlorocyclopropyl)-1-(2-chlorophenyl)-3-(1H-1,2,4-triazol-1-yl)propan-2-ol um eine relevante Verunreinigung handelt, ist deren Gehalt in Prothioconazol-haltigen Formulierungen regulatorisch limitiert.

In der WO-A 2012/033590 werden wässrige Dispersionen von Prothioconazole offenbart, die eine schwefelhaltige Verbindung, wie beispielsweise L-Cysteine, enthalten. Die dort beschriebenen Formulierungen zeigen eine verbesserte Stabilität, jedoch handelt es sich nicht um Emulsionskonzentrate. Die in der WO-A 2012/033590 offenbarten Konzepte lassen sich jedoch nicht auf Emulsionskonzentrate übertragen.

Es bestand somit nach wie vor Bedarf an stabilen Prothioconazole-haltigen Emulsionskonzentraten, die auch über längere Zeit und unter verschärften Lagerbedingungen, wie beispielweise Sauerstoffkontakt, hohe Temperaturen oder Lichteinfall, keine wesentlichen Mengen an Abbauprodukten, insbesondere an 2-(1-Chlorocyclopropyl)-1-(2-chlorophenyl)-3-(1H-1,2,4-triazol-1-yl)propan-2-ol, aufweisen.

Aufgabe der vorliegenden Erfindung bestand somit in der Bereitstellung von neuen, verbesserten Prothioconazole-haltigen Formulierungen, die über eine hohe Lagerstabilität verfügen und keine wesentliche Abbauraten von Prothioconazole zu 2-(1-Chlorocyclopropyl)-1-(2-chlorophenyl)-3-(1H-1,2,4-triazol-1-yl)propan-2-ol zeigen.

Gegenstand der vorliegenden Erfindung sind daher flüssige Formulierungen enthaltend
a) Prothioconazole sowie
b) mindestens ein organisches Lösungsmittel, dadurch gekennzeichnet, dass ein organischen Lösungsmittel eine Verbindung der Formel (I) 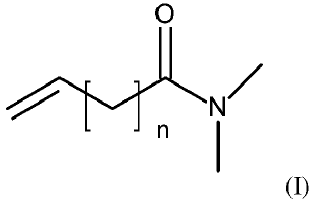 in welcher
   n für 3, 4, 5, 6, 7, 8, 9, 10, 11, 12, 15 oder 18 steht,
ist.

Die erfindungsgemäße Formulierung ist eine flüssige Formulierung. Hierzu gehören die Formulierungstypen DC (GCPF-Formulierungskode für dispergierbares Konzentrat); EC (GCPF-Formulierungskode für Emulsionskonzentrat); EW (GCPF-Formulierungskode für Öl-in-Wasser-Emulsion); ES (GCPF-Formulierungskode für Emulsionsbeize), FS (GCPF-Formulierungskode für Mehrphasenkonzentrat zur Saatgutbehandlung), EO (GCPF-Formulierungskode für Wasser in Öl Emulsion; ME (GCPF-Formulierungskode für Mikroemulsion; SE (GCPF-Formulierungskode für Suspoemulsion); SL (GCPF-Formulierungskode für wasserlösliches Konzentrat); CS (GCPF-Formulierungskode für Kapselsuspension) und AL (GCPF-Formulierungskode für gebrauchsfertige Flüssigformulierung, sonstige Flüssigkeiten zur unverdünnten Anwendung).

Besonders bevorzugt sind Emulsionskonzentrate (Formulierungstyp EC). Dabei versteht man unter einem Emulsionskonzentrat üblicherweise eine Zusammensetzung, die beim Mischen mit Wasser eine Öl-in-Wasser Emulsion bildet. Die Emulsion wird üblicherweise spontan gebildet. Das Konzentrat liegt bevorzugt als homogene Lösung vor. Üblicherweise ist es praktisch frei von dispergierten Teilchen.

Insbesondere werden mit den erfindungsgemäßen Formulierungen stabile Emulsionskonzentrat-Formulierungen von Prothioconazole, gegebenenfalls in Kombination mit weiteren organischen, in Wasser unlöslichen Wirkstoffen, bevorzugt ausgewählt unter Fungiziden und Insektiziden, zur Behandlung von Pflanzen zur Verfügung gestellt.

Weitere Gegenstände der vorliegenden Erfindung sind die Verwendung der erfindungsgemäßen Formulierungen zur Behandlung von Pflanzen sowie entsprechende Verfahren.

Prothioconazole (mit dem chemischen Namen 2-[2-(1-chlorocyclopropyl)-3-(2-chlorophenyl)-2-hydroxpropyl]-1,2-dihydro-3H-1,2,4-triazole-3-thione) (CAS-Nummer 178928-70-6), liegt als Racemat vor. Geeignete Verfahren zu dessen Herstellung werden in der DE-A 195280 beschrieben. Prothioconazole kann in der Thiono-Form der allgemeinen Formel (II) 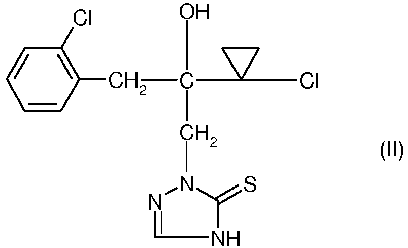 oder in der tautomeren Mercapto-Form der allgemeinen Formel (IIa) 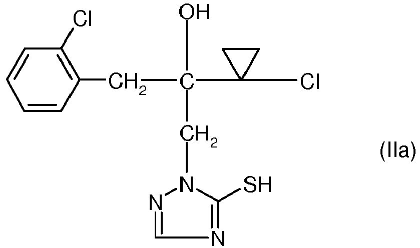 vorliegen. Mit der Verwendung des Begriffs Prothioconazole werden im Folgenden immer beide Isomere sowie beide Tautomere abgedeckt.

2-(1-Chlorocyclopropyl)-1-(2-chlorophenyl)-3-(1H-1,2,4-triazol-1-yl)propan-2-ol liegt ebenfalls als Racemat vor und hat die allgemeine Formel (III)

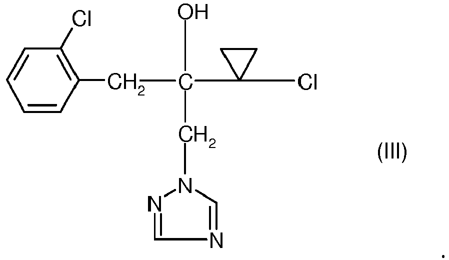

Der Anteil der Komponente a) (Prothioconazole) in den erfindungsgemäßen Formulierungen kann 1 Gew.-% bis 40 Gew.-%, bevorzugt 4 Gew.-% bis 30 Gew.-%, besonders bevorzugt 5 bis 28 betragen. Die erfindungsgemäßen Formulierungen enthalten als Lösungsmittel b) mindesten ein Lösungsmittel der Verbindung (I). Bevorzugt sind Verbindungen (I), in welchen n für 7, 8 oder 9, besonders bevorzugt für 7 oder 8 und ganz besonders bevorzugt für 7 steht.

Ganz besonders bevorzugt ist die Verbindung (I) (N,N-Dimethyl 9-decenamid, CAS Nummer: 1356964-77-6). Die Verbindung ist unter dem Handelsnamen Hallcomid^{®} 1025 bzw. Steposol^{®} MET-10U von der Firma Stepan, USA, erhältlich. Verbindungen der Formel (I) können über das Verfahren der Metathese hergestellt werden (WO-A 2012/061094).

Weitere geeignete organische Lösungsmittel b) sind
- Aromatische Kohlenwasserstoffgemische (bevorzugt Naphalin reduziert) wie z.B. Solvesso^{®};
- Aromatische Kohlenwasserstoffe wie z.B. Testbenzin, Petroleum, Alkylbenzole und Spindelöl, Xylol, Toluol oder Alkylnaphthaline;
- Aliphatische/Cyclaliphatische Kohlenwasserstoffe wie z.B. Mineralöle, Hexan, Heptan, Octan, Nonan, Decan, Cylcopentan, Cyclohexan, Decalin oder Weiß-Öl;
- Chlorierte aromatische oder aliphatische Kohlenwasserstoffe wie z.B. Chlorbenzol, Chlorethylen, oder Methylenchlorid, Chloroform oder Tetrachloromethane;
- Alkohole wie z.B. Methanol, Ethanol, iso-Propanol, Butanol, Ethylenglykol, Propylenglykol oder Benzylalkohol;
- Ether wie z.B. Tetrahydrofuran, Tetrahydrofurfurylalkohol, Tetrahydropyran, 1,4-Dioxane, Diethylether, Methyl-tert-butylether, Dihexylether, Dioctylether, Didecylether, Dibenzylether, Dimethylisosorbid, Diphenylether, Ethylphenylether, Phenylbenzylether oder Anisol;
- Monoester/Diester/Glycerin-Ester wie z.B. Ethylacetat, Butylpropionat, PentylPropionat, Benzylacetat, Benzylbenzoat, Butylbenzoat, Rhodiasolv^{®} Polarclean, Rhodiasolv^{®} RPDE, Methyllactat, Ethyllactat, Propyllactat, Butyllactat, 2-Ethylhexyllactat, Ethyl-3-Ethoxypropionat (UCAR^{®} Ester EEP, Dow Chemical Company), Dimethylsuccinat, Diethyl-succinat, Dipropylsuccinat, Dimethyladipat, Diethyladipat, Dipropyladipat, Dimethyl-glutarat, Diethylglutarat, Dipropylglutarat, Bis(2-ethylhexyl)adipat, Diisopropyladipat, Dimethyl-2-methylglutarat, Dioctylmaleat, Glycerin-monoacetat, Glycerin- diacetat, Glycerin-triacetat, Pflanzenöle wie z.B. Rapsöl, Sonnenblumenöl, Sojabohnenöl, Rizinusöl oder Maisöl;
- Lactone wie z.B. Butyrolacton, alpha-Methyl-gamma-Butyrolacton, gamma-Valerolacton oder delta-Valerolacton;
- Polyethylen/Propylenoxide wie z.B. Monoethylenglycol, Monoethylenglycol-monomethylether, Monoethylenglycol-monoethylether, Monoethylenglycol-monopropylether, Monoethylenglycolmonobutylether, Monoethylenglycol-monopentylether, Monoethylenglycol-monohexylether, Monoethylenglycol-monophenylether, Monoethylenglycol-dimethylether, Monoethylenglycoldiethylether, Monoethylenglycol-dipropylether, Monoethylenglycol-dibutylether, Monoethylenglycol-dipentylether, Monoethylenglycol-dihexylether, Monoethylenglycoldiphenylether, sowie deren längere Ethylenglycol Homologen; Monopropylenglycol, Monopropylenglycol-monomethylether, Monopropylenglycol-monoethylether, Monopropylenglycol-monopropylether, Monopropylenglycol-monobutylether, Monopropylenglycol-monopentylether, Monopropylenglycol-monohexylether, Monopropyleneglycol-monophenylether, Monopropylenglycol-dimethylether, Monopropylenglycol-diethylether, Monopropylenglycol-dipropylether, Monopropylenglycoldibutylether, Monopropylenglycol-dipentylether, Monopropylenglycol-dihexylether, Monopropylenglycol-diphenylether, sowie deren längeren Propylen Homologen; Monoethylenglycol-monomethyletheracetat, Monoethylenglycol-diacetate, sowie deren längere Ethylenglycol Homologen; Monopropylenglycol-monomethyletheracetat, Monopropylenglycoldiacetat, sowie deren längere Polypropylenglycol Homologen;
- Einfache und substituierte Amine wie z.B. Diethylamine, Triethylamine, Diisopropylamine, Diisopropylethylamine, Monoethanolamine, Diethanolamine, Triethanolamine und höher alkoxylierte Amine, Aniline oder Dimethylaniline;
- Amide/Harnstoffe wie z.B. N-Formylmorpholin, N,N-Dimethylformamid, N,N-Dimethylacetamid, N,N-Dimethylbenzamid, N,N-Dimethyloctanamid, N-N-Dimethyldecanamid, N,N-Dimethyl-dec-9-en-1-amid, N,N-Dimethyldodedecanamid, N,N-Dimethyllactamid, N,N-Decylmethylformamid, N-Methyl-2-pyrrolidon, N-Ethyl-2-pyrrolidon, N-Propyl-2-pyrrolidon, N-Butyl-2-pyrrolidon, N-Pentyl-2-pyrrolidon, N-Hexyl-2-pyrrolidon, N-Heptyl-2-pyrrolidon, N-Octyl-2-pyrrolidon, N-Nonyl-2-pyrrolidon, N-Decyl-2-pyrrolidon, N-Undecenyl-2-pyrrolidon, N-Dodecyl-2-pyrrolidon, N-Methyl-2-Piperidon, N-Methyl-caprolactam, N-Octyl-caprolactam, Tetramethylharnstoff, Tetraethylharnstoff, 1,3-Dimethyl-2-imidazolidinon, 1,3,4-Trimethyl-2-imidazolidinon, 1,3-Dimethyl-3,4,5,6-tetrahydro-2(1H)-pyrimidinon, 1-Heptyl-3-methyl-2-Imidazolidinon, 1-Heptyl-1,3-dihydro-3-methyl-2H-Imidazol-2-on;
- Ketone wie z.B. Aceton, Diaceton-alkohol, Methylethylketon, 2-Pentanon, 3-Pentanon, 2-Hexanon, 3-Hexanon, 2-Heptanon, 3-Heptanon, 4-Heptanon, 2-Octanon, 3-Octanon, 4-Octanon, Methylisopropylketon, Methyl-isobutylketone, Methyl-isopentylketon, Ethyl-isopropylketon, Ethyl-isobutylketon, Ethyl-isopentylketon, Propyl isopropyl keton, Propyl-isobutylketon, Propylisopentylketon, 3,3-Dimethyl-2-Butanon, 2,4-Dimethyl-3-Pentanon, 4,4-Dimethyl-2-Pentanon, 2,6-Dimethyl-4-Heptanon, 2,2,4,4-Tetramethyl-3-Pentanon, Cyclopentanon, Cyclohexanon. Cycloheptanon, Cyclooctanon, 2,4,6-Cycloheptatrien-1-on, Acetophenon, Propiophenon, 1-(4-Methylphenyl)-Ethanon, 1-(4-Ethylphenyl)-Ethanon, 2-Methyl-1-phenyl-1-Propanon, 1-(3-Ethylphenyl)-Ethanon, 4-phenyl-2-Butanon, 1-Phenyl-2-propanon, 1-Phenyl-2-butanon, 2-Phenyl-3-butanon, Butyrophenon oder Valerophenon.
- Nitrile wie z.B. Acetonitril, Propannitril, 2-Methyl-Propannitril, Butannitrile, 3-Methyl-Butannitril, Pentannitril, 4-Methyl-Pentannitril, Hexannitril, Heptannitril, Octannitril, Nonannitril, Decannitril, Benzonnitril, Benzen-acetonitril, Pentan-dinitril, 2-Methyl-pentan-dinitril, Hexandinitril, Heptan-dinitril, Octan-dinitril oder Nonan-dinitril;
- Acetale wie z.B. 1,1-Dimethoxymethan; 1,1-Dimethoxyethan; 1,1'-[Methylenbis(oxy)]bis-ethan; 1,1-Diethoxyethan; 1,1'-[Methylenbis(oxy)]bis-propan; 2,4,6,8-Tetraoxanonan, 1,1'-[Methylenebis(oxy)]bis-butan, 2-Methyl-1-[(2-methylpropoxy)methoxy]-propan, 2,4,6,8,10-Pentaoxaundecan, 2,5,7,10-Tetraoxaundecan, 1,3-Dioxolan, 1,3-Dioxan oder 4-Methyl-1,3-Dioxan;Orthoester wie z.B. 1,1,1-Trimethoxymethan, 1,1,1-Trimethoxyethan, 1,1,1-Trimethoxypropan, 2-Methoxy-1,3-dioxolan, 2-Methoxy-2-methyl-1,3-dioxolan, 2-Methoxy-2-methyl-1,3-dioxolan, 2-Ethoxy-1,3-dioxolan, 2-Ethoxy-2-methyl-1,3-dioxolan, 2-Ethyl-2-methoxy-1,3-dioxolan, 2-Methoxy-1,3-dioxan, 2-Methoxy-2-methyl-1,3-dioxan oder 2-Ethoxy-1,3-dioxan;
- Carbonate wie z.B. Dimethylcarbonat, Methylethylcarbonat, Diethylcarbonat, Dipropylcarbonat, Diisopropylcarbonat, Dibutylcarbonat, Dipentylcarbonat, Dihexylcarbonat, Diheptylcarbonat, Dioctylcarbonat, Dinonylcarbonat, Didecylcarbonat, Ethylencarbonat, 4-Methyl-1,3-Dioxolan-2-on, 4-(Methoxymethyl)-1,3-Dioxolan-2-on, Glycericarbonat, ButylencCarbonat, 4,6-Dimethyl-3-Dioxan-2-onoder Dibenzylcarbonat;
- Phosphate wie z.B. Trimethylphosphat, Triethylphosphat, Tripropylphosphat, Tributylphosphat, Triisobutylphosphat, Tripentylphosphat, Trihexylphosphat, Tris(2-ethylhexyl)phosphat, Tris(2-butoxyethyl) phosphat oder Triphenylphosphat;
- Sulfoxide wie z.B. Dimethylsulfoxid, Diethylsulfoxid, 1,1-Dioxidtetrahydro-thiophen, 1,1-Dioxid- tetrahydro-3-methyl-thiophen oder 1,1-Dioxid-tetrahydro-2,4-dimethyl-thiophen.

Die erfindungsgemäßen Formulierungen können neben der Verbindung (I) noch ein oder mehrere weitere Lösungsmittel b) enthalten. Bevorzugt wird als weiteres organisches Lösungsmittel N,N-Dimethyldecanamid in den erfindungsgemäßen Formulierungen eingesetzt. Ebenfalls bevorzugt sind Rhodiasolv^{®} PolarClean oder Solvesso^{®}.

Der Anteil der Komponente b) in den erfindungsgemäßen Formulierungen kann 20 Gew.-% bis 95 Gew.-%, bevorzugt 40 Gew.-% bis 80 Gew.-% betragen.

Der Anteil der Verbindung I) in der Komponenete b) kann dabei 1 Gew.-% bis 95 Gew.-%, bevorzugt 5 Gew.-% bis 70 Gew.-%, besonders bevorzugt 15 Gew.-% bis 60 Gew.-% betragen.

In einer weiteren Ausführungsform kann der Anteil der Verbindung (I) in der Komponente b) 100 Gew.% betragen.

Ebenfalls Gegenstand der vorliegenden Erfindung sind flüssige Formulierungen enthaltend
a) Prothioconazole sowie
b) mindestens ein organisches Lösungsmittel, dadurch gekennzeichnet, dass ein organisches Lösungsmittel eine Verbindung der Formel (I) 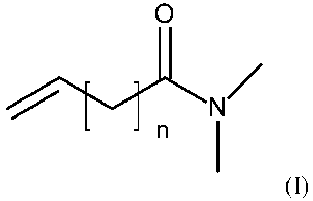 in welcher
   n für 3, 4, 5, 6, 7, 8, 9, 10, 11, 12, 15 oder 18 steht,
   ist,
c) mindestens ein nichtionischer (c1) Emulgator und
d) ein oder mehrere weitere agrochemische Wirkstoffe.

In einer weiteren Ausführungsform kann die erfindungsgemäße Formulierung einen nichtionischen (c1) und/oder anionischen (c2) Emulgator enthalten.

Gegebenenfalls kann die erfindungsgemäße Formulierung noch weitere Zusatzstoffe enthalten, wie beispielsweise kationische Emulgatoren, Entschäumer, Verdicker, Dispergiermittel, Stabilisatoren, Adjuvantien, Konservierungsmittel, Polymere, Säuren und Basen, Farbstoffe, Frostschutzmittel, Biozide, Füllstoffe und auch Wasser. Ein Adjuvant in diesem Kontext ist eine Komponente, die die biologische Wirkung der Formulierung verbessert, ohne dass die Komponente selbst eine biologische Wirkung hat. Beispiele für Adjuvantien sind Mittel, die die Retention, das Spreitverhalten, das Anhaften an der Blattoberfläche oder die Penetration fördern.

Die erfindungsgemäßen Emulsionskonzentrate sind meist weitgehend wasserfrei. Weitgehend wasserfrei bedeutet im Sinn der vorliegenden Erfindung höchstens 5 Gew.- %, bevorzugt höchstens 1 Gew.- %, und besonders bevorzugt höchstens 0,5 Gew.- % Wasser. In einer weiteren Form enthält das Konzentrat 0,5 bis 4,5 Gew.- %, bevorzugt 0,5 bis 2 Gew.-%, besonders bevorzugt 0,5 bis 1 Gew.-% Wasser.

Als nichtionische Emulgatoren c1) kommen übliche, in Formulierungen von agrochemischen Wirkstoffen vorhandene oberflächenative Substanzen in Frage. Beispielhaft genannt seien ethoxylierte Nonylphenole, Polyethylenglykolether von linearen Alkoholen, Endgruppen-verschlossene und nicht Endgruppen-verschlossene alkoxylierte lineare und verzweigte, gesättigte und ungesättigte Alkohole, Umsetzungsprodukte von Alkylphenolen mit Ethylenoxid und/oder Propylenoxid, Ethylenoxid-Propylenoxid-Blockcopolymere, Polyethylenglykole und Polypropylenglykole, weiterhin Fettsäureester, Fettsäurepolyglykoletherester, Alkylsulfonate, Alkylsulfate, Arylsulfate, ethoxylierte Arylalkylphenole, wie zum Beispiel Tristyryl-phenol-ethoxylat mit durchschnittlich 16 Ethylenoxid-Einheiten pro Molekül, weiterhin ethoxylierte und propoxylierte Arylalkylphenole sowie sulfatierte oder phosphatierte Arylalkylphenol-ethoxylate bzw. -ethoxy- und -propoxylate. Besonders bevorzugt sind Tristryl-phenolalkoxylate und Fettsäurepolyglykoletherester. Ganz besonders bevorzugt sind Tristyryl-phenolethoxylate, Tristyryl-phenol-ethoxy-propoxylate und Ricinusölpolyglykoletherestern, jeweils einzeln oder in Mischungen. Hinzu kommen gegebenenfalls Additive, wie Tenside oder Ester von Fettsäuren, die zur Verbesserung der biologischen Wirksamkeit beitragen. Geeignete nichtionische Emulgatoren c1) sind beispielsweise Soprophor^{®} 796/P, Lucramul^{®} CO30, Lucramul^{®} HOT, Lucramul^{®} PSI 100 oder Synperonic^{®} T304.

**Tabelle 1: Beispielhafte Handelsnamen und CAS-Nummern bevorzugter Emulgatoren c1)**

| **Handelsname** | **Firma** | **Allgemeine Beschreibung** | **CAS**-**Nr**. |
|---|---|---|---|
| Berol^{®} 827 | Akzo Nobel | Ricinusölethoxylat (25EO) | 26264-06-2 |
| Berol^{®} 828 | Akzo Nobel | Ricinusölethoxylat (15EO) | 26264-06-2 |
| Berol^{®} 829 | Akzo Nobel | Ricinusölethoxylat (20EO) | 26264-06-2 |
| Berol^{®} 192 | Akzo Nobel | Ricinusölethoxylat (12EO) | 26264-06-2 |
| Alkamuls^{®} A | Solvay | Ölsäure, ethoxyliert | 9004-96-0 |
| Arlatone^{®} T | Croda | ethoxyliertes Sorbitolheptaoleat (40EO) | 54846-79-6 |
| Emulsogen^{®} EL-400 | Clariant | Ricinusölethoxylat (40EO) | 61791-12-6 |
| Crovol^{®} CR70G | Croda | Fette und glyceridische Öle, pflanzlich, ethoxyliert | 70377-91-2 |
| Agnique^{®} PG8107 | BASF | Oligomere D-Glucopyranosedecyl-octylglycoside | 68515-73-1 |
| Tween^{®} 80 | Croda | Sorbitanmonooleat, ethoxyliert (20EO) | 9005-65-6 |
| Tween^{®} 85 | Croda | Sorbitantrioleat, ethoxyliert (20EO) | 9005-70-3 |
| Tween^{®} 20 | Croda | Sorbitanmonolaurat, ethoxyliert (20EO) | 9005-64-5 |

Geeignete anionische Emulgatoren c2) sind beispielweise Alkali-, Erdalkali- oder Ammoniumsalze von Sulfonaten, Sulfaten, Phosphaten, Carboxylaten und deren Mischungen wie z.B. die Salze der Alkylsulphonsäuren oder Alkylphosphorsäuren sowie Alkylarylsulphon- oder Alkylarylphosphorsäuren, Diphenylsulfonate, alpha-Olefinsulfonate, Ligninsulfonate, Sulfonate von Fettsäuren und Ölen, Sulfonate von ethoxylierten Alkylphenolen, Sulfonate von alkoxylierten Arylphenolen, Sulfonate von kondensierten Naphthalinen, Sulfonate von Dodecyl- und Tridecylbenzolen, Sulfonate von Naphthalinen und Alkylnaphthalinen, Sulfosuccinate oder Sulfosuccinamate. Beispiele für Sulfate sind Sulfate von Fettsäuren und Ölen, von ethoxylierten Alkylphenolen, von Alkoholen, von ethoxylierten Alkoholen oder von Fettsäureestern. Beispiele für Phosphate sind Phosphatester. Beispiele fur Carboxylate sind Alkylcarboxylate sowie carboxylierte Alkohol- oder Alkylphenolethoxylate. Ebenfalls geeignet ist die Gruppe der anionischen Emulgatoren der Alkalimetall-, Erdalkalimetall- und Ammoniumsalze der Polystyrolsulfonsäuren, Salze der Polyvinylsulphonsäuren, Salze der Alkylnaphthalinsulphonsäuren, Salze von Alkylnaphthalinsulphonsäure-Formaldehyd Kondensationsprodukte, Salze von Kondensationsprodukte der Naphthalinsulphonsäure, Phenolsulphonsäure und Formaldehyd. Beispiele sind Solvesso^{®} 200, Kalziumdodecylbenzensulfonat wie Rhodocal^{®} 70/B (Rhodia), Phenylsulfonat CA100 (Clariant GmbH) oder Isopropylammoniumdodecylbenzenesulfonate wie Atlox^{®} 3300B (Uniqema).

Der Anteil der Komponente c) (c1 und/oder c2) in den erfindungsgemäßen Formulierungen kann 2% bis 40% Gew.-%, bevorzugt 10% bis 35%, besonders bevorzugt 15% bis 30% betragen.

Agrochemische Wirkstoffe d) im Sinne der vorliegenden Erfindung sind fungizide, insektizide oder herbizide Wirkstoffe. Bevorzugt enthält die erfindungsgemäße Formulierung ein oder mehrere insektizide oder fungizide Wirkstoffe d), besonders bevorzugt ein oder mehrere fungizide Wirkstoffe d). Bevorzugt sind die eingesetzten Wirkstoffe wasserunlöslich.

Bevorzugte insektizide Komponenten d) sind beispielsweise Imidacloprid, Nitenpyram, Acetamiprid, Thiacloprid, Thiamethoxam, Clothianidin, Cyantraniliprole, Chlorantraniliprole, Flubendiamide, Tetraniliprole, Cyclaniliprole, Spirodiclofen, Spiromesifen, Spirotetramat, Abamectin, Acrinathrin, Chlorfenapyr, Emamectin, Ethiprole, Fipronil, Flonicamid, Flupyradifurone, Indoxacarb, Metaflumizone, Methoxyfenozid, Milbemycin, Pyridaben, Pyridalyl, Silafluofen, Spinosad, Sulfoxaflor, Triflumuron, die Verbindung aus WO-A 2006/089633 als Beispiel I-1-a-4, die Verbindung offenbart in WO-A 2008/067911 als Beispiel I-1-a-4, die Verbindung offenbart in WO 2013/092350 als Beispiel Ib-14, die Verbindung offenbart in WO 2010/51926 als Beispiel Ik-84.

Bevorzugte fungizide Komponenten d) sind beispielsweise Bixafen, Fenamidone, Fenhexamid, Fluopicolide, Fluopyram, Fluoxastrobin, Iprovalicarb, Isotianil, Isopyrazam, Pencycuron, Penflufen, Propineb, Tebuconazole, Trifloxystrobin, Ametoctradin, Amisulbrom, Azoxystrobin, Benthiavalicarbisopropyl, Benzovindiflupyr, Boscalid, Carbendazim, Chlorothanonil, Cyazofamid, Cyflufenamid, Cymoxanil, Cyproconazole, Difenoconazole, Ethaboxam, Epoxiconazole, Famoxadone, Fluazinam, Fluquinconazole, Flusilazole, Flutianil, Fluxapyroxad, Isopyrazam, Kresoxim-methyl, Mancozeb, Mandipropamid, Metconazol, Pyriofenone, Folpet, Metaminostrobin, Oxathiapiprolin, Penthiopyrad, Picoxystrobin, Probenazole, Proquinazid, Pydiflumetofen, Pyraclostrobin, Sedaxane, Spiroxamin, Tebufloquin, Tetraconazole, Valiphenalate, Zoxamide, Ziram, N-(5-chloro-2-isopropylbenzyl)-N-cyclopropyl-3-(difluoromethyl)-5 -fluoro-1 -methyl- 1H-pyrazole-4-carboxamide, N-(5-chloro-2-isopropylbenzyl)-N-cyclopropyl-3-(difluoromethyl)-5-fluoro-1-methyl-1H-pyrazole-4-carboxamide, 2-{3-[2-(1-{[3,5-bis(difluoromethyl)-1H-pyrazol-1-yl]acetyl}piperidin-4-yl)-1,3-thiazol-4-yl]-4,5-dihydro-1,2-oxazol-5-yl}phenyl methanesulfonate, 2-{3-[2-(1-{[3,5-bis(difluoromethyl)-1H-pyrazol-1-yl]acetyl}piperidin-4-yl)-1,3-thiazol-4-yl]-4,5-dihydro-1,2-oxazol-5-yl-3-chlorophenylmethane-sulfonate, (3S,6S,7R,8R)-8-Benzyl-3-[({3-[(isobutyryloxy)methoxy]-4-methoxypyridin-2-yl}carbonyl)amino]-6-methyl-4,9-dioxo-1,5-dioxonan-7-yl 2-methylpropanoat (Lyserphenvalpyr).

Besonders bevorzugte fungizide Mischungspartner d) des Prothioconazols sind beispielsweise: Tebuconazol, Spiroxamin, Bixafen, Fluoxastrobin, Trifloxystrobin, N-(5-chloro-2-isopropylbenzyl)-N-cyclopropyl-3-(difluoromethyl)-5-fluoro-1-methyl-1H-pyrazole-4-carboxamide, (3S,6S,7R,8R)-8-Benzyl-3-[({3-[(isobutyryloxy)methoxy]-4-methoxypyridin-2-yl}carbonyl)amino]-6-methyl-4,9-dioxo-1,5-dioxonan-7-yl 2-methylpropanoat (Lyserphenvalpyr) sowie Fluopyram.

Ganz besonders bevorzugt sind die Mischungen von a) (Prothioconazole) mit ein oder mehreren Verbindungen ausgewählt aus der Gruppe der Verbindungen d):
a) + d) Tebuconazole;
a) + d) Trifloxystrobin;
a) + d) Fluoxastrobin;
a) + d) Bixafen;
a) + d) Fluopyram
a) + d) Spiroxamine;
a) + d) Fluoxastrobin + Trifloxystrobin;
a) +d) Trifloxystrobin+Spiroxamin;
a) + d) Bixafen + Tebuconazole;
a) + d) Bixafen + Fluoxastrobin;
a) + d) Bixafen + Trifloxystrobin;
a) + d) Bixafen + Spiroxamin;
a) + d) Bixafen + Fluopyram;
a) + d) Tebuconazole + Spiroxamin;
a) + d) Tebuconazole + Fluopyram;
a) +d) N-(5-chloro-2-isopropylbenzyl)-N-cyclopropyl-3-(difluoromethyl)-5-fluoro-1-methyl-1H-pyrazole-4-carboxamide
a) +d) N-(5-chloro-2-isopropylbenzyl)-N-cyclopropyl-3-(difluoromethyl)-5-fluoro-1-methyl-1H-pyrazole-4-carboxamide + Tebuconazole
a) +d) N-(5-chloro-2-isopropylbenzyl)-N-cyclopropyl-3-(difluoromethyl)-5-fluoro-1-methyl-1H-pyrazole-4-carboxamide + Flupyram
a) +d) Bixafen + (3S,6S,7R,8R)-8-Benzyl-3-[({3-[(isobutyryloxy)methoxy]-4-methoxypyridin-2-yl}carbonyl)amino]-6-methyl-4,9-dioxo-1,5-dioxonan-7-yl 2-methylpropanoat (Lyserphenvalpyr)

Der Anteil der Komponente d) in den erfindungsgemäßen Formulierungen kann 1 Gew.-% bis 40 Gew.-%, bevorzugt 3 Gew.-% bis 35 Gew.-% betragen.

Der Gehalt an den einzelnen Komponenten kann in den erfindungsgemäßen Formulierungen innerhalb eines größeren Bereichs variiert werden.

In einer Ausführungsform enthalten die erfindungsgemäßen Formulierungen,
a) 1 Gew.-% bis 40 Gew.-%, bevorzugt 4 Gew.-% bis 30 Gew.-% Prothioconazole,
b) 20 Gew.-% bis 95 Gew.-%, bevorzugt 40 Gew.-% bis 80 Gew.-% organische Lösungsmittel, wobei der Anteil der Komponente I) 1 Gew.-% bis 95 Gew.-%, bevorzugt 5 Gew.-% bis 50 Gew.-% beträgt (bezogen auf Komponente b),
c) 2 Gew.-% bis 40 Gew.-%, bevorzugt 10 Gew.-% bis 35 Gew.-% nichtionischer Emulgator,
d) 1 Gew.-% bis 40 Gew.-%, bevorzugt 3 Gew.-% bis 35 Gew.-% ein oder mehrerer agrochemischer Wirkstoffe.

In einer weiteren Ausführungsform enthalten die erfindungsgemäßen Formulierungen,
a) 1 Gew.-% bis 40 Gew.-%, bevorzugt 4 Gew.-% bis 30 Gew.-% Prothioconazole,
b) 20 Gew.-% bis 95 Gew.-%, bevorzugt 40 Gew.-% bis 80 Gew.-% organische Lösungsmittel, wobei der Anteil der Komponente I) 100 Gew.-% beträgt (bezogen auf Komponente b),
c) 2 Gew.-% bis 40 Gew.-%, bevorzugt 10 Gew.-% bis 35 Gew.-% nichtionischer Emulgator,
d) 1 Gew.-% bis 40 Gew.-%, bevorzugt 3 Gew.-% bis 35 Gew.-% ein oder mehrerer agrochemischer Wirkstoffe.

Des Weiteren können die erfindungsgemäßen Formulierungen gegebenenfalls flüssige Füllstoffe e) wie beispielsweise Pflanzen- oder Mineralöle oder Ester von Pflanzen- oder Mineralölen enthalten. Geeignete Pflanzenöle e) sind alle Öle, die üblicherweise in Agrochemikalien eingesetzt werden können und sich aus Pflanzen gewinnen lassen. Als Beispiele seien Sonnenblumenöl, Rapsöl, Olivenöl, Ricinusöl, Kolzaöl, Maisöl, Baumwollsamenöl, Wallnussöl, Kokosnussöl und Sojaöl genannt. Mögliche Ester sind beispielsweise Ethylhexylpalmitat, Ethylhexyloleat, Ethylhexylmyristat, Ethylhexylcaprylat, Isopropylmyristat, Isopropylpalmitat, Methyloleat, Methylpalmitat, Ethyloleat. Bevorzugt sind Rapsöl-Methylester und Ethylhexylpalmitat. Mögliche Mineralöle sind Exxsol^{®} D100 und Weißöle.

**Tabelle 2: Beispielhafte Handelsnamen und CAS-Nummern bevorzugter Verbindungen e)**

| **Handelsname** | **Firma** | **Allgemeine Beschreibung** | **CAS- Nr.** |
|---|---|---|---|
| Sonnenblumenöl | | Triglyceride von unterschiedlichen C14-C18-Fettsäuren, vorwiegend ungesättigt | 8001-21-6 |
| Rapsöl | | Triglyceride von unterschiedlichen C14-C18-Fettsäuren, vorwiegend ungesättigt | 8002-13-9 |
| Maisöl | | Triglyceride von unterschiedlichen C14-C18-Fettsäuren, vorwiegend ungesättigt | 8001-30-7 |
| Sojaöl | | Triglyceride von unterschiedlichen C14-C18-Fettsäuren, vorwiegend ungesättigt | 8001-22-7 |
| Reisöl | | Triglyceride von unterschiedlichen C14-C18-Fettsäuren, vorwiegend ungesättigt | 68553-81-1 |
| Radia^{®} 7129 Crodamol^{®} OP | Oleon NV, BE Croda, UK | Ethylhexylpalmitat | 29806-73-3 |
| Radia^{®} 7331 | Oleon NV, BE | Ethylhexyloleat | 26399-02-0 |
| Radia^{®} 7128 | Oleon NV, BE | C12/C14-Ethylhexylmyristat/-laurat | 29806-75-5 |
| Radia^{®} 7127 | Oleon NV, BE | Ethylhexyllaurat | 20292-08-4 |
| Radia^{®} 7126 | Oleon NV, BE | C8/10-Ethylhexylcaprylat/caprat | 63321-70-0 |
| Estol^{®} 1514 | Croda | Isopropylmyristat | 110-27-0 |
| Radia^{®} 7104 | Oleon NV, BE | Capryl-,Caprinsäure-Triglyceride, neutrales Pflanzenöl | 73398-61-5. 65381-09-1 |
| Radia^{®} 7732 Crodamol^{®} IPM | Oleon NV, BE Croda, UK | Isopropylpalmitat | 142-91-6 |
| Radia^{®} 7060 | Oleon NV, BE | Methyloleat | 112-62-9 |
| Radia^{®} 7120 | Oleon NV, BE | Methylpalmitat | 112-39-0 |
| Crodamol^{®} EO | Croda | Ethyloleat | 111-62-6 |
| AGNIQUE ME^{®} 18 RD-F, Edenor^{®} MESU | Clariant BASF | Rapsöl-Methylester | 67762-38-3. 85586-25-0 |
| Exxsol^{®} D100 | Exxon Mobil | Hydrotreating-Leichtsieder (Petroleum) | 64742-47-8 |
| Solvesso^{®} 200ND | ExxonMobil | Solvent Naphtha (Petroleum), schwer aromatisch, naphthalinabgereichert | 64742-94-5 |
| Kristol^{®} M14 Marcol^{®} 82 Ondina^{®} 917 | Carless ExxonMobil Shell | Weißes Mineralöl (Petroleum), C14-C30 verzweigt und linear | 8042-47-5 |
| Exxsol^{®}D130 Banole^{®} 50 | ExxonMobil Total | Weißes Mineralöl (Petroleum) | 64742-46-7 |
| Genera^{®}-12 | Total | Weißes Mineralöl (Petroleum) | 72623-86-0 |
| Genera^{®}-9 | Total | Weißes Mineralöl (Petroleum) | 97862-82-3 |

Weitere, gegebenenfalls in den erfindungsgemäßen Formulierungen enthaltene Zusätze f) sind Penetrationsförderer, Netzmittel, Spreitmittel und/oder Retentionsmittel. Geeignet sind alle Substanzen, die üblicherweise in Agrochemikalien zu diesem Zweck eingesetzt werden können.

Als Zusätze f) geeignet sind beispielsweise
- ethoxylierte verzweigte Alkohole (z.B. Genapol^{®} Typ X) mit 2-20 EO-Einheiten;
- ethoxylierte verzweigte Alkohole mit endständigem Methyl (z.B. Genapol^{®} Typ XM) mit 2-20 EO-Einheiten;
- ethoxylierte Kokosnussalkohole (z.B. Genapol^{®} C-Typen) mit 2-20 EO-Einheiten;
- ethoxylierte C12/15-Alkohole (z.B. Synperonic^{®} A-Typen) mit 2-20 EO-Einheiten;
- propoxy-ethoxylierte Alkohole, verzweigt oder linear, z.B. Antarox^{®} B/848, Atlas^{®} G5000, Lucramul^{®} HOT 5902;
- propoxy-ethoxylierte Fettsäuren mit endständigem Methyl, z.B. Leofat^{®} OC0503M;
- organomodifizierte Polysiloxane, z.B. BreakThru^{®} OE444, BreakThru^{®} S240, Silwett^{®} L77, Silwett^{®} 408;
- Mono- und Diester von Sulfosuccinat-Na-Salzen mit verzweigten oder linearen Alkoholen mit 1-10 Kohlenstoffatomen;
- ethoxylierte Diacetylendiole (z.B. Surfynol^{®}).

**Tabelle 3: Beispielhafte Handelsnamen und CAS-Nummern bevorzugter Verbindungen f)**

| **Handelsname** | **Firma** | **Allgemeine Beschreibung** | **CAS- Nr.** |
|---|---|---|---|
| Lucramul^{®} HOT 5902 | Levaco | Alkoholethoxylat-propoxylat (C8-PO8/E06) | 64366-70-7 |
| Genapol^{®} X060 | Clariant | Alkoholethoxylat (iso-C13-EO6) | 9043-30-5 |
| Genapol^{®} XM 060 | Clariant | Alkoholethoxylat (iso-C13-EO6/mit Me-Endgruppe) | 345642-79-7 |
| Triton^{®} GR 7 ME | Dow | Dioctylsulfosuccinat, Natriumsalz | 577-11-7 |
| BreakThru^{®} OE 444 | Evonik Industries | Siloxane und Silicone, Cetyl-Me, Di-Me | 191044-49-2 |
| BreakThru^{®} S240 | Evonik Industries | Polyethermodifiziertes Trisiloxan | 134180-76-0 |
| Silwett^{®} L77 | Momentive | Polyalkylenoxidmodifiziertes Heptamethyltrisiloxan | 67674-67-3 |
| Silwett^{®} 408 | Momentive | Polyalkylenoxidmodifiziertes Heptamethyltrisiloxan | 67674-67-3 |
| Antarox^{®} B/848 | Solvay | Oxiran, Methyl-, Polymer mit Oxiran, Monobutylether | 9038-95-3 |
| Atlas^{®} G5000 | Croda | Oxiran, Methyl-, Polymer mit Oxiran, Monobutylether | 9038-95-3 |
| Leofat^{®} OC-0503M | Lion Chemical, JP | Oxiran, Methyl-, Polymer mit Oxiran, Mono-(9Z)-9-octadecenoat, Methylether, Block | 181141-31-1 |
| Surfynol^{®} 440 | Air Products | 2.4.7.9-Tetramethyldec-5-in-4.7-diol, ethoxyliert | 9014-85-1 |

Geeignete Zusätze g), die gegebenenfalls in den erfindungsgemäßen Formulierungen enthalten sein können, sind Entschäumer g1), Konservierungsmittel g2), Antioxidantien g3), Farbstoffe g4) und inerte Füllstoffe g5).

Als Entschäumer g1) sind alle Substanzen geeignet, die üblicherweise in Agrochemikalien zu diesem Zweck eingesetzt werden können. Bevorzugt sind Siliconöle, Siliconölzubereitungen Magnesiumstearat, Phosphin- und Phosphonsäuren. Beispiele sind Silcolapse^{®} 482 von Bluestar Silicones, Silfoam^{®} SC1132 von Wacker [Dimethylsiloxane und -silicone, CAS-Nr. 63148-62-9], SAG 1538 oder SAG 1572 von Momentive [Dimethylsiloxane und -silicone, CAS-Nr. 63148-62-9] oder Fluowet^{®} PL 80.

Mögliche Konservierungsmittel g2) sind alle Substanzen, die üblicherweise in Agrochemikalien zu diesem Zweck eingesetzt werden können. Als Konservierungsmittel eignen sich beispielsweise Zubereitungen mit 5-Chlor-2-methyl-4-isothiazolin-3-on [CIT; CAS-Nr. 26172-55-4], 2-Methyl-4-isothiazolin-3-on [MIT, CAS-Nr. 2682-20-4] oder 1.2-Benzisothiazol-3(2H)-on [BIT, CAS-Nr. 2634-33-5]. Als Beispiele seien Preventol^{®} D7 (Lanxess), Kathon^{®} CG/ICP (Rohm & Haas), Acticide^{®} SPX (Thor GmbH) und Proxel^{®} GXL (Arch Chemicals) genannt.

Als Antioxidantien g3) sind alle Substanzen geeignet, die üblicherweise in Agrochemikalien zu diesem Zweck eingesetzt werden können. Bevorzugt ist Butylhydroxytoluol [3.5-Di-tert.-butyl-4-hydroxytoluol, CAS-Nr. 128-37-0] und Zitronensäure.

Mögliche Farbstoffe g4) sind alle Substanzen, die üblicherweise in Agrochemikalien zu diesem Zweck eingesetzt werden können. Als Beispiele seien Titandioxid, Ruß, Zinkoxid, blaue Pigmente, rote Pigmente und Permanent Red FGR genannt.

Als inerte Füllstoffe g5) sind alle Substanzen geeignet, die üblicherweise in Agrochemikalien zu diesem Zweck eingesetzt werden können und die nicht als Verdicker fungieren. Bevorzugt sind anorganische Partikel, wie Carbonate, Silicate und Oxide, und auch organische Substanzen, wie Harnstoff-Formaldehyd-Kondensate. Als Beispiele seien Kaolin, Rutil, Siliciumdioxid ("hochdisperse Kieselsäure"), Kieselgel sowie natürliche und synthetische Silicate, zudem Talk genannt.

Die Herstellung der erfindungsgemäßen Formulierungen erfolgt z.B. in der Weise, dass man die Komponenten a) bis d) in den jeweils gewünschten Verhältnissen miteinander vermischt. Handelt es sich bei dem agrochemischen Wirkstoff um eine Festsubstanz, so setzt man diesen im allgemeinen entweder in kristalliner oder amorpher Form oder in Form einer Lösung in einem organischen Solvens ein. Es ist außerdem möglich, einen festen agrochemischen Wirkstoff in Form einer Schmelze einzusetzen.

Die vorliegende Erfindung betrifft auch ein Verfahren zur Herstellung der erfindungsgemäßen flüssigen Formulierungen durch Mischen der Komponenten a), b), c) und d) sowie den gegebenenfalls weiteren Additiven.

Die Temperaturen können bei der Durchführung des Verfahrens in einem bestimmten Bereich variiert werden. Man arbeitet im allgemeinen bei Temperaturen zwischen 0°C und 80°C, vorzugsweise zwischen 10°C und 60°C

Bei der Durchführung des erfindungsgemäßen Verfahrens geht man im Allgemeinen so vor, dass der Wirkstoff zunächst im Lösungsmittel gelöst wird. Die weiteren Komponenten werden dann in die entstehende Lösung gerührt. Zur Durchführung des erfindungsgemäßen Verfahrens kommen übliche Geräte in Betracht, die zur Herstellung von agrochemischen Formulierungen eingesetzt werden.

Als Applikationsformen können alle, dem Fachmann als gebräuchlich bekannten Verfahren verwendet werden; beispielsweise genannt seien: Spritzen, Tauchen, Nebeln sowie eine Reihe spezieller Verfahren zur direkten unter- oder oberirdischen Behandlung von gesamten Pflanzen oder Teilen (Saatgut, Wurzel, Stolonen, Stängel, Stamm, Blatt), wie beispielsweise Stamminjektion bei Bäumen oder Stängelbandagen bei perennierenden Pflanzen, und eine Reihe spezieller indirekter Applikationsverfahren.

Die jeweilige flächen- und/oder objektbezogene Aufwandmenge der Pflanzenschutzmittel unterschiedlichster Formulierungstypen zur Bekämpfung der genannten Schadorganismen variiert sehr stark. Im Allgemeinen werden hierfür die, dem Fachmann als gebräuchlich für das jeweilige Einsatzgebiet bekannten Applikationsmedien in den gebräuchlichen Mengen eingesetzt; wie beispielsweise von mehreren hundert Liter Wasser pro Hektar bei Standard-Spritzverfahren über wenige Liter Öl pro Hektar bei der 'Ultra Low Volume'-Flugzeugapplikation bis hin zu wenigen Millilitern einer physiologischen Lösungen bei Injektionsverfahren. Die Konzentrationen der erfindungsgemäßen Pflanzenschutzmittel in den entsprechenden Applikationsmedien variieren daher in einem weiten Bereich und sind vom jeweiligen Einsatzgebiet abhängig. Im Allgemeinen werden Konzentrationen verwendet, die dem Fachmann als gebräuchlich für das jeweilige Einsatzgebiet bekannt sind. Bevorzugt sind Konzentrationen von 0,01 Gew.% bis 99 Gew.%, besonders bevorzugt von 0,1 Gew.% bis 90 Gew.%.

Die erfindungsgemäßen agrochemischen Formulierungen können z.B. in den für Flüssigpräparate üblichen Zubereitungsformen entweder als solche oder nach vorherigem Verdünnen mit Wasser ausgebracht werden, also z.B. als Emulsionen, Suspensionen oder Lösungen. Die Anwendung erfolgt dabei nach üblichen Methoden, also z.B. durch Verspritzen, Gießen oder Injizieren.

In Abhängigkeit von der Art des neben Prothioconazole möglicherweise zusätzlich vorliegenden Wirkstoffs sind die erfindungsgemäßen Formulierungen zur Bekämpfung einer großen Zahl von Schädlingen nützlich und können sowohl zur Behandlung von Pflanzenkulturen, aber auch von unbelebter Materie und im Haushalt eingesetzt werden.

Unter "Schädlingen" oder "schädlichen Organismen" werden hier alle Arten von Schädlingen verstanden, die mit organischen Pflanzenschutzwirkstoffen, d.h. Pflanzenschutzmitteln, insbesondere Fungiziden und Mischungen von Fungiziden mit anderen Pflanzenschutzmitteln, bekämpft bzw. unter Kontrolle behalten werden können. Der Begriff Schädling umfasst daher pflanzenschädigende Organismen, insbesondere Schadpilze und deren Sporen, aber auch schädliche Insekten, Arachniden, Nematoden und Schadpflanzen. Der Begriff "Kontrolle" umfasst sowohl die kurative Behandlung, d.h. die Behandlung von befallenen Pflanzen mit einer erfindungsgemäßen Formulierung, als auch die protektive Behandlung, d.h. die Behandlung von Pflanzen zum Schutz vor einem Schädlingsbefall.

Die vorliegende Erfindung betrifft somit auch die Verwendung von hierin beschriebenen Formulierungen zur Bekämpfung von Schädlingen, insbesondere Pflanzenschädlingen; und ein Verfahren zur Bekämpfung von schädlichen Organismen, insbesondere von pflanzenschädigenden Organismen, umfassend das in Kontakt Bringen der schädlichen Organismen, ihres Habitats, ihrer Wirte, wie Pflanzen und Saatgut, sowie des Erdreichs, des Gebiets und der Umgebung in denen sie wachsen oder wachsen könnten, aber auch von Materialien, Pflanzen, Saatgut, Erdreich, Oberflächen oder Räumen, die vor dem Angriff oder dem Befall durch pflanzenschädigende Organismen geschützt werden sollen, mit einer wirksamen Menge der erfindungsgemäßen Formulierungen.

Ein weiterer Gesichtspunkt der Erfindung betrifft die Verwendung der hierin beschriebenen Formulierungen zum Schutz von Pflanzen einschließlich Saatgut, insbesondere um Nutzpflanzen vor dem Befall durch schädliche Organismen, insbesondere Schadpilzen, zu schützen. Die vorliegende Erfindung betrifft somit auch die Verwendung der Formulierungen zur Bekämpfung pflanzenschädlicher Organismen wie beispielsweise Schadpilzen, Insekten, Arachniden, Nematoden und Schadpflanzen, insbesondere zur Bekämpfung von Schadpilzen.

Die Formulierungen der Erfindung können im Pflanzenschutz vor allem als Blatt-, Beiz- und Bodenfungizide in an sich bekannter Weise zur Bekämpfung von pflanzenpathogenen Pilzen eingesetzt werden.

Als Pflanzen, welche mit den erfindungsgemäßen Formulierungen behandelt werden können, seien folgende erwähnt: Baumwolle, Flachs, Weinrebe, Obst, Gemüse, wie *Rosaceae sp*. (beispielsweise Kernfrüchte wie Apfel und Birne, aber auch Steinfrüchte wie Aprikosen, Kirschen, Mandeln und Pfirsiche und Beerenfrüchte wie Erdbeeren), *Ribesioidae sp*., *Juglandaceae sp*., *Betulaceae sp*., *Anacardiaceae sp*., *Fagaceae sp*., *Moraceae sp*., *Oleaceae sp*., *Actinidaceae sp*., *Lauraceae sp*., *Musaceae sp*. (beispielsweise Bananenbäume und -plantagen), *Rubiaceae sp*. (beispielsweise Kaffee), *Theaceae sp*., *Sterculiceae sp*., *Rutaceae sp*. (beispielsweise Zitronen, Organen und Grapefruit); *Solanaceae sp*. (beispielsweise Tomaten), *Liliaceae sp*., *Asteraceae sp*. (beispielsweise Salat), *Umbelliferae sp*., *Cruciferae sp*., *Chenopodiaceae sp*., *Cucurbitaceae sp*. (beispielsweise Gurke), *Alliaceae sp*. (beispielsweise Lauch, Zwiebel), *Papilionaceae sp*. (beispielsweise Erbsen); Hauptnutzpflanzen, wie *Gramineae sp*. (beispielsweise Mais, Rasen, Getreide wie Weizen, Roggen, Reis, Gerste, Hafer, Hirse und Triticale), *Asteraceae sp*. (beispielsweise Sonnenblume), *Brassicaceae sp*. (beispielsweise Weißkohl, Rotkohl, Brokkoli, Blumenkohl, Rosenkohl, Pak Choi, Kohlrabi, Radieschen sowie Raps, Senf, Meerrettich und Kresse), *Fabacae sp*. (beispielsweise Bohne, Erdnüsse), *Papilionaceae sp*. (beispielsweise Sojabohne), *Solanaceae sp*. (beispielsweise Kartoffeln), *Chenopodiaceae sp*. (beispielsweise Zuckerrübe, Futterrübe, Mangold, Rote Rübe); Zuckerrohr, Mohn, Olive, Kokosnuss, Kakao, Tabak und Nutzpflanzen und Zierpflanzen in Garten und Wald; sowie jeweils genetisch modifizierte Arten dieser Pflanzen, sowie die Samen dieser Pflanzen.

Bevorzugt werden die erfindungsgemäßen Formulierungen zur Behandlung von Weizen, Gerste, Roggen, Soja, Zwiebeln, Mais und Erdnüssen eingesetzt.

Insbesondere lassen sich mit den erfindungsmäßigen Formulierungen des Prothioconazols grundsätzlich alle Schadpilzerkrankungen bekämpfen, die auch mit den bekannten Formulierungen des Prothioconazols bekämpft werden können. Abhängig von dem jeweiligen, gegebenenfalls vorliegenden Mischungspartner handelt es sich beispielsweise um die folgenden Pflanzenerkrankungen:
*Alternaria* Arten an Gemüse, Raps, Zuckerrüben, Soja, Getreide, Baumwolle, Obst und Reis (z.B. A. *solani* oder A. *alternata* an Kartoffel und anderen Pflanzen), *Aphanomyces* Arten an Zuckerrüben und Gemüse, *Ascochyta sp*. an Baumwolle und Reis, *Bipalaris-* und *Drechslera* Arten an Mais, Getreide, Reis und Rasen (z.B. *teres* an Gerste, *D. tritci*-*repentis* an Weizen), *Blumeria graminis* (Echter Mehltau) an Getreide, *Botrytis cinerea* (Grauschimmel) an Erdbeeren, Gemüse, Blumen und Weinreben, *Botryodiplodia sp*. an Baumwolle, *Bremia lactucae* an Salat, *Cerospora* Arten an Mais, Sojabohnen, Reis und Zuckerrüben (z.B. *C. beticula* an Zuckerrüben), *Cochliobolus* Arten an Mais, Getreide, Reis (z.B. *Cochliobolus sativus* an Getreide, *Cochliobolus miyabeanus* an Reis), *Corynespora sp*. an Sojabohnen, Baumwolle und anderen Pflanzen, *Colletotrichum* Arten an Sojabohnen, Baumwolle und anderen Pflanzen (z.B. *C. acutatum* an verschiedenen Pflanzen), *Curvularia sp*. an Getreide und Reis, *Diplodia sp*. an Getreide und Reis, *Exserohilum* Arten an Mais, *Erysiphe cichoracearum* und *Sphaerotheca fuliginea* an Gurkengewächsen, *Fusarium* und *Verticillium* Arten (z.B. *V. dahliae*) an verschiedenen Pflanzen (z.B. *F. graminearum* an Weizen), *Gaeumanomyces graminis* an Getreide, *Gibberella* Arten an Getreide und Reis (z.B. *Gibberella fujikuroi* an Reis), *Grainstaining complex* an Reis, *Helminthosporium* Arten (z.B. *H. graminicola*) an Mais und Reis, *Macrophomina sp*. an Soja und Baumwolle, *Michrodochium sp*. (z.B. *M. nivale* an Getreide), *Mycosphaerella* Arten an Getreide, Bananen und Erdnüssen (*M. graminicola* an Weizen, *M. fijiesis* an Banane), *Phaeoisaripsis sp*. an Sojabohnen, *Phakopsara sp*. (z.B. *P. pachyrhizi* und *P. meibomiae* an Sojabohnen), *Phoma sp*. an Soja, *Phomopsis* Arten an Sojabohnen, Sonnenblumen und Weinreben (*P. viticola* an Weinreben, *P. helianthii* an Sonnenblumen), *Phytophthora infestans* an Kartoffeln und Tomaten, *Plasmopara viticola* an Weinreben, *Penecilium sp*. an Soja und Baumwolle, *Podosphaera leucotricha* an Apfel, *Pseudocercosporella herpotrichoides* an Getreide, *Pseudoperonospora* Arten an Hopfen und Gurkengewächsen (z.B. *P. cubenis* an Gurke), *Puccinia* Arten an Getreide, Mais und Spargel (P. *triticina* und *P. striformis* an Weizen, *P. asparagi* an Spargel), *Pyrenophora* Arten an Getreide, *Pyricularia oryzae*, *Corticium sasakii*, *Sarocladium oryzae*, *S. attenuatum*, *Entyloma oryzae* an Reis, *Pyricularia grisea* an Rasen und Getreide, *Pythium spp.* an Rasen, Reis, Mais, Baumwolle, Raps, Sonnenblumen, Zuckerrüben, Gemüse und anderen Pflanzen, *Rhizoctonia*-Arten (z.B. *R. solani*) an Baumwolle, Reis, Kartoffeln, Rasen, Mais, Raps, Kartoffeln, Zuckerrüben, Gemüse und anderen Pflanzen, *Rynchosporium sp*. (z.B. *R. secalis*) an Reis und Getreide, *Sclerotinia* Arten (z.B. *S*. *sclerotiorum*) an Raps, Sonnenblumen und anderen Pflanzen, *Septoria tritici* und *Stagonospora nodorum* an Weizen, *Erysiphe* (syn. *Uncinulanecator*) an Weinrebe, *Setospaeria* Arten an Mais und Rasen, *Sphacelotheca reilinia* an Mais, *Thievaliopsis* Arten an Sojabohnen und Baumwolle, *Tilletia* Arten an Getreide, *Ustilago* Arten an Getreide, Mais und Zuckerrübe, und *Venturia* Arten (Schorf) an Apfel und Birne (z.B. V. *inaequalis* an Apfel).

Die erfindungsgemäßen Formulierungen können unverdünnt oder mit Wasser verdünnt appliziert werden. In der Regel werden sie mit wenigstens einem Teil Wasser, bevorzugt mit 10 Teilen Wasser und besonders bevorzugt mit wenigstens 100 Teilen Wasser, beispielsweise mit 1 bis 10.000, vorzugsweise 10 bis 5.000 und ganz besonders bevorzugt mit 50 bis 24000 Teilen Wasser bezüglich eines Teiles der Formulierung verdünnt.

Ebenfalls Gegenstand der vorliegenden Erfindung ist eine Emulsion erhältlich durch Mischen von Wasser mit der erfindungsgemäßen flüssigen Formulierung. Das Mischungsverhältnis von Wasser zu Emulsionskonzentrat kann im Bereich von 1000 zu 1 bis 1 zu 1, bevorzugt 400 zu 1 bis 10 zu 1 betragen.

Die Verdünnung wird erreicht, indem die erfindungsgemäßen Emulsionskonzentrate zu dem Wasser gegossen werden. Zur raschen Vermischung des Konzentrats mit Wasser wird üblicherweise Agitation, wie beispielsweise Rühren, eingesetzt. Allerdings ist eine Agitation in der Regel nicht notwendig. Obwohl die Temperatur für den Verdünnungsvorgang ein unkritischer Faktor ist, werden Verdünnungen üblicherweise bei Temperaturen im Bereich von O°C bis 50°C, insbesondere bei 10°C bis 30°C oder bei Umgebungstemperatur durchgeführt.

Das zum Verdünnen eingesetzte Wasser ist in der Regel Leitungswasser. Das Wasser kann aber bereits wasserlösliche oder feindispergierte Verbindungen beinhalten, die im Pflanzenschutz verwendet werden, wie etwa Nährstoffe, Düngemittel oder Pestizide.

Zu der erfindungsgemäßen Emulsion können als Vormischung oder gegebenenfalls erst kurz vor der Verwendung (Tank-Mix) verschiedene Arten von Ölen, Netzmitteln, Adjuvantien, Düngemitteln oder Mikronährstoffen sowie weitere Pestizide (z.B. Herbizide, Insektizide, Fungizide, Wachstumsregulatoren, Safener) hinzugefügt werden. Diese Mittel können den erfindungsgemäßen Formulierungen im Gewichtsverhältnis 1:100 bis 100:1,bevorzugt 1:10 bis 10:1,zugemischt werden.

Der Verwender appliziert die erfindungsgemäße Formulierung üblicherweise aus einem Vordosierungsgerät, einer Rückenspritze, einem Spritztank, einem Spritzflugzeug oder einem Bewässerungssystem. üblicherweise wird die erfindungsgemäße Formulierung mit Wasser, Puffer und/oder weiteren Hilfsstoffen auf die gewünschte Ausbringungskonzentration verdünnt, wodurch man die gebrauchsfertige Spritzflüssigkeit bzw. agrochemische Zusammensetzung der Erfindung erhält. Üblicherweise werden pro Hektar landwirtschaftlicher Nutzflache 20 bis 2000 Liter, bevorzugt 50 bis 400 Liter, der gebrauchsfertigen Spritzbrühe ausgebracht.

Die erforderlichen Aufwandmengen der reinen Wirkstoffe ohne Formulierungshilfsstoffe hängen von der Intensität des Schädlingsbefalls, von der Entwicklungsphase der Pflanzen, von den klimatischen Bedingungen des Einsatzortes und dem Applikationsverfahren ab. Im Allgemeinen liegt die Aufwandmenge im Bereich von 0,001 bis 3 kg, bevorzugt von 0,005 bis 2 kg, besonders bevorzugt von 0,01 bis 1 kg und ganz besonders bevorzugt von 50 bis 500 g Wirkstoff pro Hektar, wobei Wirkstoff hier Prothioconazole zuzüglich möglicher weiterer Wirkstoffe bedeutet.

Die in der Regel verdünnten Formulierungen der Erfindung werden hauptsächlich durch Besprühen, insbesondere Besprühen der Blätter, appliziert. Die Applikation kann mit dem Fachmann bekannten Sprühtechniken, beispielsweise unter Verwendung von Wasser als Träger und Spritzbrühenmengen von etwa 50 bis 1 000 Litern pro Hektar, beispielsweise von 100 bis 00 Litern pro Hektar, durchgeführt werden.

Die neuen Prothioconazole-haltigen Formulierungen verfügen über vorteilhafte Eigenschaften für die Behandlung von Pflanzen, insbesondere zeichnen sie sich durch gute Anwendungseigenschaften, hohe Stabilität und hohe fungizide Aktivität aus.

Die Erfindung wird durch die Beispiele näher erläutert ohne sie darauf zu beschränken.

### Beispiele

### Eingesetzte Komponenten:

| **Handelsname** | **Chemische Bezeichnung** | **Hersteller** |
|---|---|---|
| Lucramul^{®} CO30 | Nichtionischer Emulgator, Rizinusöl ethoxyliert | Levaco Chemicals, DE |
| Soprophor^{®} 796/P | Nichtionischer Emulgator, Ethoxyliertes-Propoxyliertes Tristyrylphenol | Solvay |
| SAG1572 | Wässrige Emulsion von Polydimethylsiloxan | Momentive^{®} |
| Hallcomid^{®} 1025 | Di-Methyl-Decenamid | Stepan |
| Genagen^{®} 4296 | Di-Methyl-Decanamid | Clariant |
| Agnique^{®} KE 3308 | Di-Methyl-Decanamid | BASF |

### Bestimmung von 2-(1-Chlorocyclopropyl)-1-(2-chlorophenyl)-3-(1H-1,2,4-triazol-1-yl)propan-2-ol (Verbindung III) in Formulierungen

2-(1-Chlorocyclopropyl)-1-(2-chlorophenyl)-3-(1H-1,2,4-triazol-1-yl)propan-2-ol wird von den Formulierbestandteilen auf einer Umkehrphasensäule unter Verwendung eines isokratischen Laufmittels getrennt. Nach der MS/MS Detektion, wird die quantitative Auswertung durch Vergleich der Peakflächen mit denen des Referenzgegenstandes, unter Verwendung eines externen Standards durchgeführt.

| | |
|---|---|
| Hochdruckflüssigkeitschromatograph : | HP 1090 |
| Probeninjektion: | HP 1090 Autoinjector |
| Massenspektrometer : | Quattro I, Fisons |
| Integration und Auswertung : | MassLynx von Micromass |

**Beispiel 1: Rezeptur einer Prothioconazole -Emulsionskonzentrat-Formulierung**

| **Komponente** | **% wt/wt** |
|---|---|
| Prothioconazole | 25.0 |
| Rizinusöl ethoxyliert 30EO (Lucramul^{®} CO30) | 20.0 |
| Entschäumer (Momentive^{®} SAG1572) | 0.1 |
| Dimethyl-Decanamid (Genagen^{®} 4296) | 54.9 |

**Beispiel 2: Rezeptur einer Prothioconazole-Emulsionskonzentrat-Formulierung mit Hallcomid^{®} 1025 als vollständigem Ersatz von Genagen^{®} 4296**

| **Komponente** | **% wt/wt** |
|---|---|
| Prothioconazole | 25.0 |
| Rizinusöl ethoxyliert 30EO (Lucramul^{®} CO30) | 20.0 |
| Entschäumer (Momentive^{®} SAG1572) | 0.1 |
| Di-Methyl-Decenamid (Hallcomid^{®} 1025) | 54.9 |

**Beispiel 3: Rezeptur einer Prothioconazole-Emulsionskonzentrat-Formulierung mit Hallcomid^{®} 1025 als teilweisem Ersatz von Genagen^{®}4296**

| **Komponente** | **% wt/wt** |
|---|---|
| Prothioconazole | 25.0 |
| Rizinusöl ethoxyliert 30EO (Lucramul^{®} CO30) | 20.0 |
| Entschäumer (Momentive^{®} SAG1572) | 0.1 |
| Di-Methyl-Decenamid (Hallcomid^{®} 1025) | 10 |
| Dimethyl-Decanamid (Genagen^{®} 4296) | 44.9 |

**Beispiel 4: Rezeptur einer Prothioconazole-Emulsionskonzentrat-Formulierung mit Hallcomid^{®} 1025 als teilweisem Ersatz von Genagen^{®}4296**

| **Komponente** | **% wt/wt** |
|---|---|
| Prothioconazole | 25.0 |
| Rizinusöl ethoxyliert 30EO (Lucramul^{®} CO30) | 20.0 |
| Entschäumer (Momentive^{®} SAG1572) | 0.1 |
| Di-Methyl-Decenamid (Hallcomid^{®} 1025) | 20 |
| Dimethyl-Decanamid (Genagen^{®} 4296) | 34.9 |

**Beispiel 5: Vergleich Verbindung (III)-Gehalt der Formulierungen aus Beispiel 1 bis 4**

| | **Verbindung (III)-Gehalt % wt/wt** | **% wt/wt Hallcomid^{®} 1025** |
|---|---|---|
| PTZ EC 250 | 0.0029 | 0 |
| PTZ EC 250 | 0.0008 | 10 |
| PTZ EC 250 | 0.0007 | 20 |
| PTZ EC 250 | 0.0001 | 54.90 |

Trotz des bereits sehr geringen Gehalts an Verbindung (III) in der Ausgangsprobe, konnte der Gehalt an Verbindung (III) bei Zugabe von 10 % wt/wt des Lösungsmittels Hallcomid^{®} 1025 um 72 %, bei Zugabe von 20 % wt/wt um 76% und bei Zugabe von 54,9 % wt/wt um 97% reduziert werden.

**Beispiel 6: Rezeptur einer Mischungsformulierung PTZ+TBZ EC 80+160**

| **Komponente** | **% wt/wt** |
|---|---|
| Prothioconazole | 8.2 |
| Tebuconazole | 16.3 |
| Rizinusöl ethoxyliert 30EO (Lucramul^{®} CO30) | 7.5 |
| TSP alkoxylate (Soprophor^{®} 796/P) | 7.5 |
| Entschäumer (Momentive^{®} SAG1572) | 0.1 |
| Di-Methyl-Decanamid (Agnique^{®} KE3308) | 60.4 |

**Beispiel 7: Rezeptur einer Mischungsformulierung PTZ+TBZ EC 80+160 mit vollständigem Ersatz von Agnique^{®} KE3308 durch Hallcomid^{®} 1025**

| **Komponente** | **% wt/wt** |
|---|---|
| Prothioconazole | 8.2 |
| Tebuconazole | 16.3 |
| Rizinusöl ethoxyliert 30EO (Lucramul^{®} CO30) | 7.5 |
| TSP alkoxylate (Soprophor^{®} 796/P) | 7.5 |
| Entschäumer (Momentive^{®} SAG1572) | 0.1 |
| Di-Methyl-Decenamid (Hallcomid^{®} 1025) | 60.4 |

**Beispiel 8: Vergleich Verbindung (III)-Gehalt der Formulierungen aus Beispiel 6 und 7**

| | **Verbindung (III)-Gehalt % wt/wt** | **% wt/wt Hallcomid^{®} 1025** |
|---|---|---|
| PTZ+TBZ 80+160 | 0.0022 | 0 |
| PTZ+TBZ 80+160 | 0.0004 | 60.4 |

Auch hier ist deutlich erkennbar, dass der bereits sehr geringe Wert an Verbindung (III) bei Zugabe von 60,4 % wt/wt nochmals um 82 % reduziert werden konnte.

**Beispiel 9: Vergleich Verbindung (III)-Gehalt der Formulierungen aus Beispiel 1 bis 4 nach 2 wöchiger Lagerungen bei 54°C**

| | **Verbindung** (**III**)-**Gehalt** %**wt**/**wt** | **% wt/wt Hallcomid^{®} 1025** |
|---|---|---|
| PTZ EC 250 | 0.0056 | 0 |
| PTZ EC 250 | 0.0014 | 10 |
| PTZ EC 250 | 0.0010 | 20 |
| PTZ EC 250 | 0.0001 | 54.90 |

Bei der Lagerung über 2 Wochen bei 54°C ist ebenfalls der Effekt deutlich erkennbar. Bei einer Zugabe von 10 % wt/wt Hallcomid^{®} verringert sich der Gehalt an Verbindung (III) um 75%, bei einer Zugabe von 20 % wt/wt Hallcomid^{®} um 82 % und bei einer Zugabe von 56,9 % wt/wt Hallcomid^{®} um 98 %.

## Patentansprüche

1. Flüssige Formulierungen enthaltend
a) Prothioconazole sowie
b) mindestens ein organisches Lösungsmittel,
**dadurch gekennzeichnet, dass** ein organischen Lösungsmittel eine Verbindung der Formel (I) 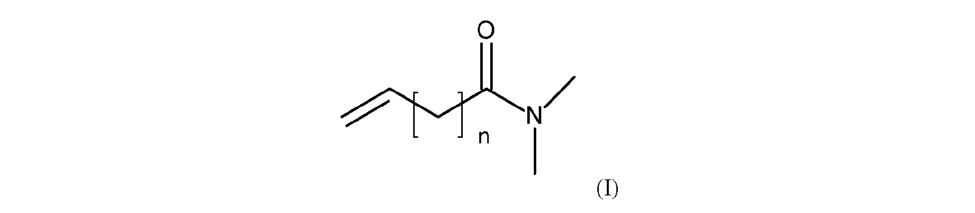 in welcher
n für 3, 4, 5, 6, 7, 8, 9, 10, 11, 12, 15 oder 18 steht,
ist.

2. Formulierungen gemäß Anspruch 1, **dadurch gekennzeichnet, dass** in der Formel (I) n für 7, 8 oder 9 steht

3. Formulierungen gemäß Anspruch 1, **dadurch gekennzeichnet, dass** der Anteil der Komponente b) 20 Gew.-% bis 95 Gew.-% beträgt.

4. Formulierungen gemäß Anspruch 3, **dadurch gekennzeichnet, dass** der Anteil der Verbindung I) in der Komponente b) 1 Gew.-% bis 95 Gew.-% beträgt.

5. Formulierungen gemäß Anspruch 3, **dadurch gekennzeichnet, dass** der Anteil der Verbindung (I) in der Komponente b) 100 Gew.% beträgt.

6. Formulierungen gemäß Anspruch 1, **dadurch gekennzeichnet, dass** diese
c) mindestens einen nichtionischen (c1) Emulgator und
d) ein oder mehrere weitere agrochemische Wirkstoffe enthalten.

7. Formulierungen gemäß Anspruch 6, **dadurch gekennzeichnet, dass** diese einen nichtionischen (c1) und/oder anionischen (c2) Emulgator enthalten.

8. Formulierungen gemäß Anspruch 6, **dadurch gekennzeichnet, dass** agrochemische Wirkstoffe d) ein oder mehrere insektizide oder fungizide Wirkstoffe sind.

9. Formulierungen gemäß Anspruch 1 oder 6, **dadurch gekennzeichnet, dass** diese
a) 1 Gew.-% bis 40 Gew.-% Prothioconazole,
b) 20 Gew.-% bis 95 Gew.-% organische Lösungsmittel, wobei der Anteil der Komponente I) 1 Gew.-% bis 95 Gew.-% beträgt (bezogen auf Komponente b),
c) 2 Gew.-% bis 40 Gew.-% nichtionischer Emulgator,
d) 1 Gew.-% bis 40 Gew.-% % ein oder mehrerer agrochemischer Wirkstoffe enthalten.

10. Formulierungen gemäß Anspruch 1, **dadurch gekennzeichnet, dass** diese höchstens 5 Gew.- % Wasser enthalten.

11. Verfahren zur Herstellung der flüssigen Formulierungen gemäß Anspruch 6 durch Mischen der Komponenten a), b), c) und d) sowie den gegebenenfalls weiteren Additiven.

12. Verfahren zur Bekämpfung von schädlichen Organismen umfassend das in Kontaktbringen der schädlichen Organismen, ihres Habitats, ihrer Wirte, wie Pflanzen und Saatgut, sowie des Erdreichs, des Gebiets und der Umgebung in denen sie wachsen oder wachsen könnten, aber auch von Materialien, Pflanzen, Saatgut, Erdreich, Oberflächen oder Räumen, die vor dem Angriff oder dem Befall durch pflanzenschädigende Organismen geschützt werden sollen, mit einer wirksamen Menge der Formulierungen gemäß Anspruch 1.

13. Verwendung der Formulierungen gemäß Anspruch 1 zum Schutz von Pflanzen einschließlich Saatgut, insbesondere um Nutzpflanzen vor dem Befall durch schädliche Organismen zu schützen.

14. Verwendung der Formulierungen gemäß Anspruch 1 zur Bekämpfung pflanzenschädlicher Organismen, wie beispielsweise phytopathogene Schadpilzen, Insekten, Arachniden, Nematoden und Schadpflanzen.

15. Verwendung gemäß Ansprüche 13 oder 14, **dadurch gekennzeichnet, dass** die schädlichen Organismen phytopathogene Schadpilze sind.

16. Emulsion, erhältlich durch Mischen von Wasser mit Formulierungen gemäß Anspruch 1, wobei das Mischungsverhältnis von Wasser zu Emulsionskonzentrat im Bereich von 1000 zu 1 bis 1 zu 1 betragen kann.
